# EUROPEAN PATENT SPECIFICATION

(11) **EP 2 784 032 B1**
(45) Date of publication and mention of the grant of the patent: **01.02.2017**
(21) Application number: 14162152.4
(22) Date of filing: 27.03.2014
(51) Int. Cl.: C03B 33/07, B23K 26/06, B23K 37/02, B23K 26/08, B23K 26/38, B23K 26/40, B23K 101/18, B23K 103/00, B23K 37/04

(54) **MACHINE FOR CUTTING A LAMINATED GLASS SHEET**
VORRICHTUNG ZUM SCHNEIDEN VON VERBUNDENER GLASSCHEIBE
APPAREIL DE DÉCOUPE DE FEUILLE DE VERRE LAMINÉE

(30) Priority: 27.03.2013 IT TO20130252
(43) Date of publication of application: 01.10.2014
(73) Proprietor: Bottero S.p.A., Cuneo (IT)
(72) Inventor: Ghinamo, Leonardo, 12100 Cuneo (IT); Olocco, Guido, 12012 Boves (IT); Ferrari, Simone, 12100 Cuneo (IT); Viglietti, Davide, 12080 Pianfei (IT)
(74) Representative: Boggio, Luigi

(56) References cited:
- WO-A1-2011/117006
- AU-B2- 603 937
- DE-A1- 4 228 906
- DE-U1-202007 001 346
- GB-A- 2 139 614
- JP-A- H0 769 663
- US-A- 1 738 228
- US-A1- 2005 006 361
- US-A1- 2008 296 263

## Description

The present invention relates to a machine for cutting a laminated glass sheet.

In particular, the present invention relates to a machine for cutting a laminated glass sheet comprising two side glass sheets and an intermediate sheet of thermoplastic material, generally known as PVB.

For cutting a glass sheet of the type described above, it is known to use a cutting machine which comprises, for each glass sheet, a respective scoring tool adapted to make a scoring line and a respective breaking unit to break the respective glass sheet along the respective scoring line and form two pieces of sheet held side-by-side by the thermoplastic material sheet.

The machine further comprises a heating device for the intermediate thermoplastic material sheet after the glass sheets have been broken.

The heating device generally comprises an incandescent heating bulb having a filament arranged, in use, along and in position adjacent to the scoring line of one of the glass sheets.

The light bulb is turned on cyclically and kept on for a predetermined time for heating and weakening the intermediate portion of the thermoplastic material sheet which extends between the two pieces of sheet.

The light bulb is kept on until the intermediate portion of the sheet reaches a required degree of weakening and the pieces are separated.

The weakening of the mentioned intermediate portion requires a particularly long time compared to the entire breaking cycle of the laminated sheet, and this is mostly due to the fact that the beam emitted by the source is a diverging beam and thus only a part of the beam itself strikes the intermediate portion of the thermoplastic material sheet. The remaining part of the beam purposelessly heats other zones of the thermoplastic material and/or of the external glass sheets, and for this reason the remaining part of the beam is normally screened and the light bulb is arranged in the immediate proximity of the glass sheet. Assemblies for heating an intermediate layer of a laminated glass sheet are disclosed, for example, in DE 42 28 906, US2008/296263, US 1 738 228 and JP H 0769663A.

It is an object of the present invention to provide a machine for cutting a laminated glass sheet, which allows to solve the problems illustrated above in simple and cost-effective manner and, in particular, allows an efficient heating of the intermediate zone of the thermoplastic material sheet and a considerable reduction of the heating and weakening time of the intermediate sheet with respect to the known solutions. It is the object of the present invention to provide a machine in which the heating of the thermoplastic material sheet may be carried out without needing to use fluids or other heating/cooling means of the external glass sheets.

According to the present invention a machine for cutting a laminated glass sheet as disclosed in claim 1 is provided.

The invention further relates to an elongated heating source for a machine for cutting a laminated glass sheet.

According to the present invention an elongated heating source for a machine for cutting a laminated glass sheet as disclosed in claim 13 is provided.

The invention will now be described with reference to the accompanying drawings which illustrate a non-limitative embodiment thereof, in which:
figure 1 shows a machine for cutting a glass sheet made according to the dictates of the present invention, diagrammatically and substantially in blocks;
figure 2 shows a section view, on a highly magnified scale, of a first preferred embodiment of a detail in figure 1;
figure 3 is a figure similar to figure 2 and shows a second preferred embodiment of a detail in figure 1; figure 4 is a figure similar to figure 3 and shows a variant of a detail in figure 3;
figure 5 shows a section view, on a highly magnified scale, of a third preferred embodiment of a detail in figure 1; and

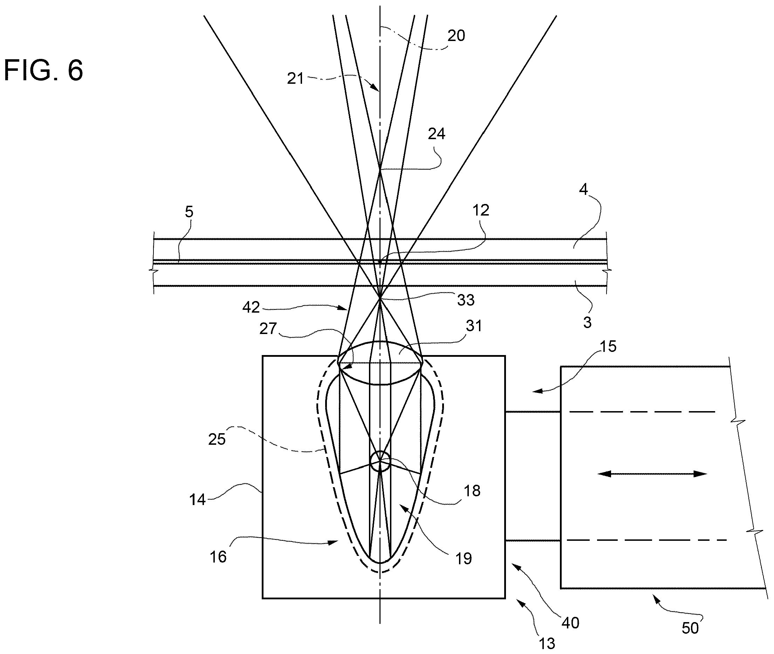

figure 6 shows a section view, on a highly magnified scale, of a fourth preferred embodiment of a detail in figure 1.

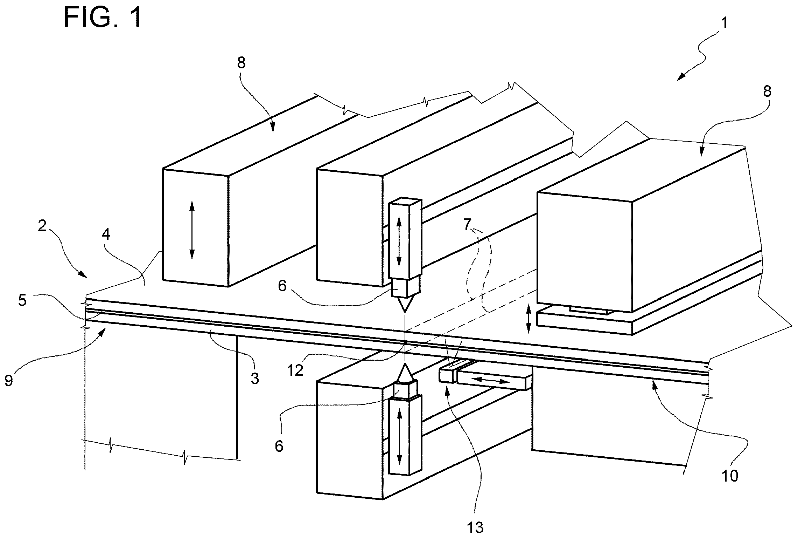

Figure 1 shows, as a whole, a machine for cutting a glass sheet 2 comprising two side glass sheets, indicated by reference numerals 3 and 4, and an intermediate sheet 5 made of thermoplastic material, normally known as PVB.

The machine 1 comprises a resting plane for the sheet 2 and, for each glass sheet 3,4, a respective motorized scoring head 6, known in itself and not described in detail, for making a scoring line 7 on each sheet and a breaking assembly 8 of the etched glass sheets 3,4, known in itself and not described in detail, adapted to bend both sheets 3,4 so as to break both sheets 3,4 along the scoring lines 7 and to form two pieces 9 and 10 of sheet joined to each other by means of a seamless elongated intermediate portion 12 of the thermoplastic material sheet.

Again with reference to figure 1, the machine 1 further comprises a heating and cutting assembly 13 of the intermediate portion 12.

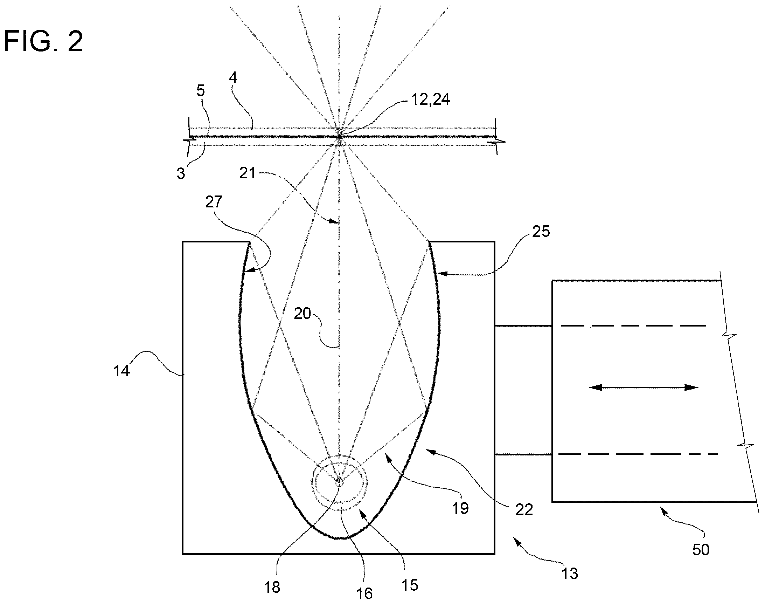

With reference to figure 1 and, in particular to figure 2, the assembly 13 is arranged in use, during a step of heating, in a fixed heating position with respect to the resting plane and to the laminated sheet 2, in which it extends practically facing the glass sheet 3 at the respective scoring line 7 and comprises an outer casing 14, and an elongated heating source 15 of the incandescent type. The source 15 extends for the entire width of the resting plane, and thus again from one side to the other of any glass sheet 2 to be cut arranged on the resting plane itself and comprises, in turn, a tubular bulb 16 permeable to the heating rays, and an elongated filament 18 housed in the bulb 16 parallel to the sheet 2 and to the etching line 7 and adapted to emit, in use, a diverging heating beam 19 towards the intermediate portion 12 having a continuous spectrum and a wavelength varying, for example, between 0.3 and 3 micron.

Alternatively, according to a different embodiment, the source 15 comprises two or more bulbs 16 housing respective filaments and arranged, in use, mutually aligned and arranged along the line 7 to cover the entire width of the resting plane and, possibly, protrude beyond the resting plane.

Therefore, the heating beam 19 is an elongated beam which extends, in use, for the entire length of the line 7 so as to heat all points of the elongated portion 12 of the thermoplastic material sheet 12 simultaneously. The beam 19 has an optical plane 20 thereof, which intersects the elongated portion 12 and coincides with a plane 21 orthogonal to the sheet 2 and passing between the two pieces 9 and 10.

Again with reference to figure 2, the cutting assembly 13 further comprises a focusing device 22 associated with the source 15 and, preferably, integrally connected to the source 15, to focus at least part of the heating beam 19 along an elongated focusing line 24 intersecting the intermediate elongated portion 12 and lying on the plane 20.

According to a variant (not shown), the device 22 focuses the heating beam 19 into two focusing lines 24 which are parallel to each other, distinct and may either intersect the intermediate portion 12 or not. In this manner, it is possible to control the heating of both the intermediate zone 12 and of other portions of the sheet surrounding the intermediate portion 12 itself in punctual manner. In both cases, the focusing device 22 forms a thermal blade or knife which extends again for the entire width of the sheet, i.e. for the entire width of the line 7, and ends with the mentioned elongated focusing line 24 so as to heat the entire portion 12 of the thermoplastic material sheet simultaneously. In this manner, the portion 12 is uniformly heated along its entire length and is thus both thermally and mechanically uniform, regardless of the heating temperature reached. Different temperatures at the ends of the scoring line with respect to the middle may be obtained by using thermal blades protruding beyond the sides of the glass sheet 2.

Again with reference to figure 2, the focusing device 22 comprises a conveniently elliptical or parallel reflecting body 25, which is specular with respect to the plane 21. Conveniently, the reflecting body 25 houses the source 15 arranged in a focus of the reflecting body itself.

The reflecting body 25 has an outlet opening 27 and, conveniently, a geometry such as to intercept and deflect the maximum amount of the thermal beam 19 emitted by the source 15 on the mentioned focusing line 24.

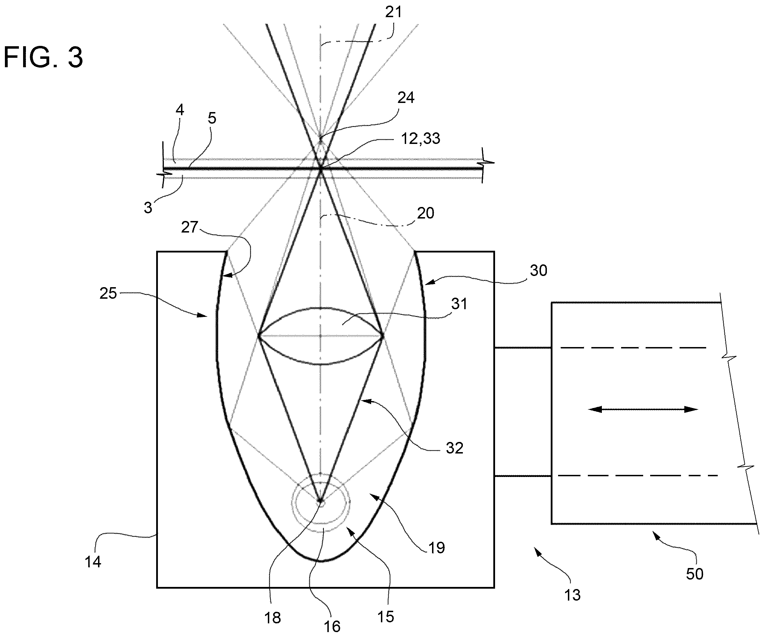

The embodiment shown in figure 3 relates to a focusing device 30, which differs from the focusing device 22 in that it comprises, in addition to the reflecting body 25, at least one focusing lens 31, distinct from the reflecting body 25 and arranged along the axis 20 to deflect a part 32 of the heating beam 19 coming directly from the source 15 and/or reflected by the reflecting body 25 and to focus it along a focusing line 33 parallel to the focusing line 24. Conveniently, the focusing line 33 is different from the focusing line 24 and lays on the intermediate portion 12.

According to a variant (not shown), the focusing line 33 is arranged upstream of the elongated portion intermediate 12 in the propagation direction of the heating beam 19 and the focusing line 24 lays on the intermediate elongated portion 12.

Furthermore, the lens 31 is conveniently a biconvex lens housed within the reflecting body 25 and arranged substantially at half the distance between the filament 18 and the sheet 5 of thermoplastic material; furthermore, the biconvex lens 31 preferably has a focus arranged on the filament 18 and a focus arranged on the focusing line 33.

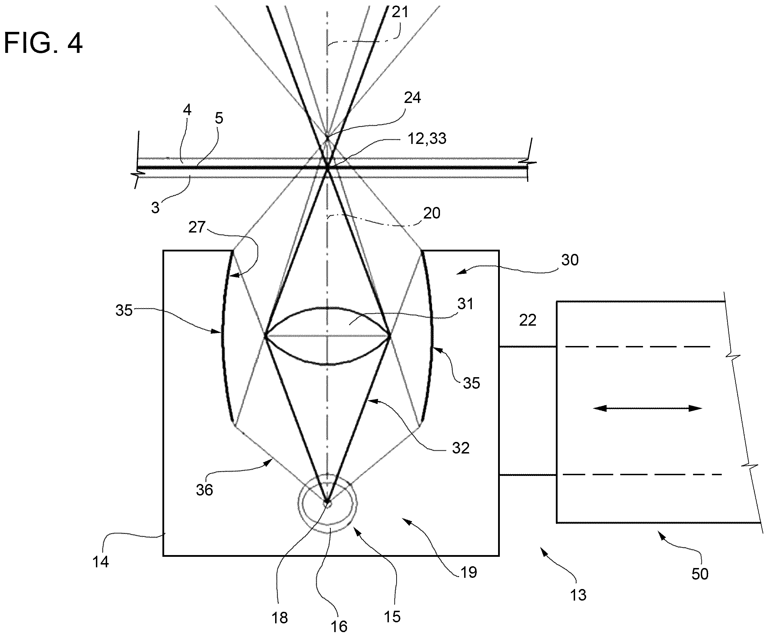

In the variant shown in figure 4, the reflecting body 25 is replaced by a pair of concave side reflecting screens arranged on opposite sides of the plane 21.

Conveniently, the screens 35 have respective concavities facing each other and are specular with respect to the plane 21 to deflect a part 36 of the heating beam 19 towards the glass sheet 2 and focus it on the line 24 which, in the particular example described, is arranged downstream of the sheet 2 in the propagation direction of the heating beam 19.

According to a further embodiment (not shown), the lens 31 is replaced by an assembly of lenses adapted to receive the heating rays either directly from the source 15 or reflected by the reflecting bodies 25 or by the screens 35 and to focus them one or more focusing lines in the neighborhood of the intermediate portion 12 or in part laying on the intermediate portion 12 itself.

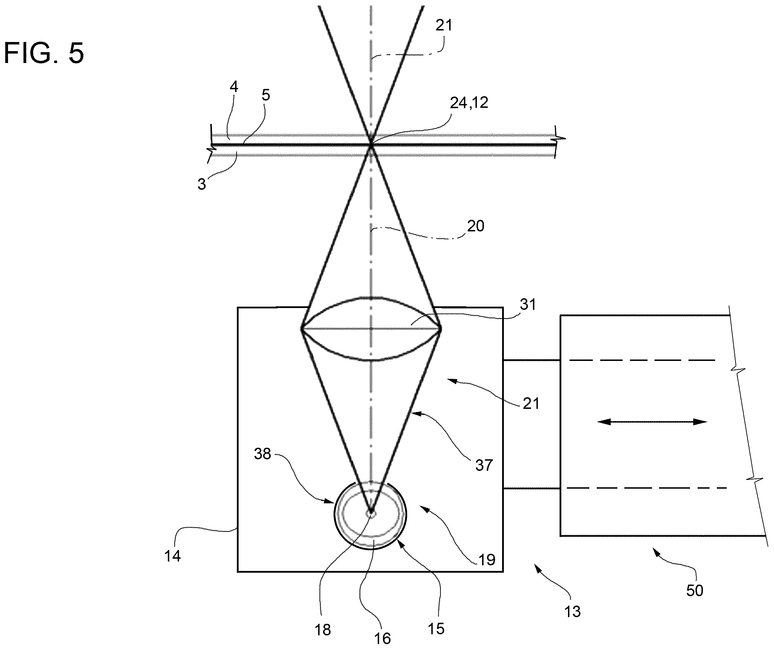

The focusing device shown in figure 5 differs from the device 22 in that it is free from the reflecting body 25 or the screens 35. In such a solution, a part 37 of the heating beam 19 emitted by the source 15 and intersecting the lens 31 is focused on the intermediate portion 12. Conveniently, the remaining part of the heating beam 19 is reflected on the filament 18 by a layer 38 of reflecting material which directly and partially coats the bulb 16.

Figure 5 shows a focusing assembly 40, which differs from the focusing assemblies 22 and 30 in that the reflecting body 25 and the lens 31 define part of the bulb 16 of the heating source 15; in the particular example described, the lens 31 is arranged downstream of the reflecting body 25 in the advancement direction of the heating beam 19 to at least partially close the opening 27. In such a solution, the reflecting body 25 focuses a part 42 of the heating beam which does not cross the lens 31 along the focusing line 24 which is arranged downstream of the intermediate portion 12, while the remaining part of the heating beam 19 which crosses the lens 19, because it is either directed towards the lens 31 itself or reflected onto the lens 31 by the reflecting body 25, is focused by the lens 31 along the focusing line 33, which in the particular example described is upstream of the laminated glass sheet 2.

Finally, regardless of the focusing method of the heating beam 19, the cutting assembly 13 comprises a guide and slide positioning device 50, diagrammatically illustrated in the accompanying figures, to translate the outer casing 14 and, consequently, the respective source 15 and the respective focusing devices 22,30 and 40 from and to the laminated glass sheet 2 and to vary the position of the focusing line or lines 24,33 with respect to the intermediate thermoplastic material portion 12 and with respect to the etching line 7. According to a variant (not shown), the assembly 13 is free from the device 50, while according to a further variant, an adjustment device similar to the device 50 is provided to move and position the source 15 or the lens 31 or the assembly of lenses along plane 20 from and to the resting plane.

Conveniently, the position of the focusing line or lines 24,33 is adjusted to obtain the desired heating of the intermediate portion 12 and, simultaneously, the heating of a portion of glass sheet 3 arranged in the neighborhood of the respective etching line 7. In this manner, the features of the outer glass sheet 3, the breakage of which in this manner requires either a minimum external action or occurs spontaneously along the previous etching line, vary simultaneously with the heating of the intermediate thermoplastic portion 12. In all cases, no fluid is used neither to cool the outer glass sheets during softening of the elongated portion of the thermoplastic material sheet nor to obtain the breakage of the glass sheets.

Therefore, in such conditions, the breakage of one of the glass sheets occurs simultaneously with the cutting of the intermediate thermoplastic material portion by previously etching the glass sheet itself or not.

From the above, it is apparent that, with respect to the known solutions, the focusing of part or all of the thermal beam emitted by the filament into one or more focusing lines placed in relative predetermined positions with respect to the etching lines and thus to the breakage zone of the sheet, allows to direct at least part of the thermal energy into a restricted zone of the intermediate portion thus drastically reducing the time needed and to take the intermediate portion 12 itself to a condition of breakage.

From the above, it is apparent that changes and variations can be made to the preferred embodiments described above without because of this departing from the scope of protection defined by the independent claim or claims. In particular, the reflecting body 25 and/or the screens 35 may be different from those indicated by way of example, and the lenses or assemblies of lenses may be different from those used for focusing or concentrating the heating beam emitted by the source or portions of the heating beam itself along elongated focusing lines arranged in positions equal to or different from those shown but always in the neighborhood of the portion 12 to be heated of the intermediate sheet 5.

Finally, the position of the lens could be different with respect to the resting plane of the laminated sheet and/or of the source 15 provided to emit the heating beam which could be for example, arranged over the resting plane.

Finally, the thermal source 15 could extend only for a stretch and not extend for the entire width of the resting plane so as to always obtain a thermal blade but having a length measured parallel to the resting plane smaller than that obtained with the source which extends for the entire length of the resting plane itself and, for example, greater than 20 millimeters. In such a condition, the heating of the elongated intermediate portion is obtained by displacing the thermal source on the resting plane and the sheet so as to cut one with respect to the other to heat elongated stretches of the mentioned intermediate elongated portion uniformly and simultaneously.

## Claims

1. A machine for cutting a laminated glass sheet comprising two side glass sheets and an intermediate sheet of thermoplastic material; the machine comprising a resting plane, scoring and breaking means to divide the laminated glass sheet into two pieces of sheet joined together by an elongated intermediate portion of said sheet of thermoplastic material, and a heating assembly of said elongated intermediate portion; the heating assembly comprising an outer bulb and heating emitting means comprising an incandescent elongated source housed in said bulb; the elongated incandescent source being arranged over or under said resting plane, kept during a step of heating in a fixed position with respect to said resting plane and to said sheet to emit a divergent heating beam having an optical axis thereof intersecting said elongated intermediate portion, **characterized in that** said heating assembly further comprises first focusing means for focusing at least part of said heating beam along at least a first elongated focusing line either external to or intersecting the elongated intermediate portion of said sheet of thermoplastic material and forming a thermal blade extending along said elongated portion to heat said elongated portion simultaneously.

2. A machine according to claim 1, **characterized in that** said first focusing means comprise a reflecting body housing said elongated source to deflect the maximum amount of said heating beam emitted by said elongated source onto said first focusing line.

3. A machine according to claim 1, **characterized in that** said first focusing means comprise at least a pair of concave side deflector screens arranged on opposite sides of said optical axis.

4. A machine according to claim 3, **characterized in that** said screens are specular with respect to a lying plane of said optical axis and perpendicular to said laminated glass sheet.

5. A machine according to any one of claims 1 to 4, **characterized in that** said focusing assembly also comprises second focusing means different and distinct from said first focusing means for deflecting at least part of said heating beam either direct or reflected by said first focusing means and focusing it along at least a second focusing line either coincident with or distinct from said first focusing line.

6. A machine according to claim 5, **characterized in that** said second focusing line lies on said elongated intermediate portion and said first etching line is arranged downstream of the elongated intermediate portion in the propagation direction of said heating beam.

7. A machine according to claim 6, **characterized in that** said second focusing line is arranged upstream of said elongated intermediate portion in the propagation direction of said thermal beam and said first focusing line is arranged either downstream of, or lying on, said elongated intermediate portion.

8. A machine according to one of the claims from 5 to 7, **characterized in that** said second focusing means comprise at least one converging lens surrounded by said first focusing means.

9. A machine according to claim 8, **characterized in that** said lens is a biconvex lens arranged substantially at half the distance between said heat source and said layer of thermoplastic material; said biconvex lens having a focus arranged on said elongated source and a focus arranged on said second focusing line.

10. A machine according to one of claims 5 to 7, **characterized in that** said second focusing means comprise at least one converging lens arranged downstream of said first focusing means in the propagation direction of said heating beam emitted by the elongated source.

11. The machine according to claim 10, **characterized in that** said first focusing means have an outlet opening of said heating beam; said converging lens at least partially closing said outlet opening.

12. A machine according to claim 1, **characterized in that** said first focusing means comprise a biconvex lens for focusing said heating beam on said elongated intermediate portion.

13. An elongated heating source for a machine for cutting a laminated glass sheet comprising two side glass sheets and an intermediate sheet of thermoplastic material; the machine comprising cutting and breaking means to divide the laminated glass sheet into two pieces of sheet joined together by an elongated intermediate portion of said sheet of thermoplastic material; the source comprising an outer bulb and heating emitting means comprising an elongated incandescent source housed in said bulb and adapted to generate a divergent heating beam having an optical axis thereof adapted to intersect, in use, said elongated intermediate portion, **characterized in that** it further comprises first focusing means for focusing at least part of said heating beam along a first elongated focusing line and obtaining an elongated thermal blade extending, in use, along said elongated portion to heat said elongated portion simultaneously.

14. A source according to claim 13, **characterized in that** it further comprises second focusing means different and distinct from said first focusing means for deflecting at least part of said heating beam either direct or reflected by said first focusing means and focusing it along a second focusing line either coincident with or distinct from said first focusing line.

15. A source according to claim 14, **characterized in that** said first and second focusing means form part of said bulb.

## Patentansprüche

1. Maschine zum Schneiden einer laminierten Glasplatte, die zwei Seitenglasplatten und eine Zwischenbahn aus thermoplastischem Material aufweist; wobei die Maschine aufweist: eine Auflageebene, Ritz- und Brecheinrichtungen zum Teilen der laminierten Glasplatte in zwei Plattenteile, die durch einen langgestreckten Zwischenbereich der Bahn aus thermoplastischem Material miteinander verbunden sind, und eine Heizanordnung für den langgestreckten Zwischenbereich; wobei die Heizanordnung eine äußere Lampe und Wärme emittierende Einrichtungen aufweist, welche eine in der Lampe aufgenommene langgestreckte **Glühquelle** aufweisen; wobei die langgestreckte **Glühquelle** über oder unter der Auflageebene angeordnet ist, **und** während eines Schritts des Erwärmens in einer festen Position in Bezug auf die Auflageebene und die Bahn gehalten ist, um einen divergenten Heizstrahl zu emittieren, der eine optische Achse aufweist, die den langgestreckten Zwischenbereich schneidet, **dadurch gekennzeichnet, dass** die Heizanordnung ferner erste Fokussiereinrichtungen zum Fokussieren mindestens eines Teils des Heizstrahls entlang mindestens einer ersten langgestreckten Fokussierlinie, die entweder außerhalb des langgestreckten Zwischenbereichs der Bahn aus thermoplastischen Material liegt oder diesen schneidet und eine thermische Klinge bildet, die sich entlang des langgestreckten Bereichs erstreckt, um den langgestreckten Bereich zeitgleich zu erwärmen.

2. Maschine nach Anspruch 1, **dadurch gekennzeichnet, dass** die ersten Fokussiereinrichtungen einen reflektierenden Körper aufweisen, der die langgestreckte Quelle aufnimmt, um die maximale Menge des von der langgestreckten Quelle emittierten Heizstrahls auf die erste Fokussierlinie zu lenken.

3. Maschine nach Anspruch 1, **dadurch gekennzeichnet, dass** die ersten Fokussiereinrichtungen mindestens ein Paar konkaver Seitendeflektorschirme aufweisen, die aus gegenüberliegende Seiten der optischen Achse angeordnet sind.

4. Maschine nach Anspruch 3, **dadurch gekennzeichnet, dass** die Schirme in Bezug auf eine liegende Ebene der optischen Achse und senkrecht zu der laminierten Glasplatte spiegelnd sind.

5. Maschine nach einem der Ansprüche 1 bis 4, **dadurch gekennzeichnet, dass** die Fokussieranordnung ferner zweite Fokussiereinrichtungen aufweist, die von den ersten Fokussiereinrichtungen verschieden und zu diesen unterschiedlich sind, um mindestens einen Teil des Heizstrahls, entweder direkt oder durch die ersten Fokussiereinrichtungen reflektiert, zu lenken und diesen entlang mindestens einer zweiten Fokussierlinie zu fokussieren, die entweder mit der ersten Fokussierlinie zusammenfällt oder von dieser verschieden ist.

6. Maschine nach Anspruch 5, **dadurch gekennzeichnet, dass** die zweite Fokussierlinie auf dem langgestreckten Zwischenbereich liegt und **eine** erste Ätzlinie stromabwärts des langgestreckten Zwischenbereichs in der Ausbreitungsrichtung des Heizstrahls angeordnet ist.

7. Maschine nach Anspruch 6, **dadurch gekennzeichnet, dass** die zweite Fokussierlinie stromaufwärts des langgestreckten Zwischenbereichs in der Ausbreitungsrichtung des Heizstrahls angeordnet ist, und die erste Fokussierlinie entweder stromabwärts des langgestreckten Zwischenbereichs oder auf diesem liegend angeordnet ist.

8. Maschine nach einem der Ansprüche 5 bis 7, **dadurch gekennzeichnet, dass** zweiten Fokussiereinrichtungen mindestens eine Sammellinse aufweisen, die von den ersten Fokussiereinrichtungen umgeben ist.

9. Maschine nach Anspruch 8, **dadurch gekennzeichnet, dass** die Linse eine bikonvexe Linse ist, die im Wesentlichen in der Mitte der Strecke zwischen der Wärmequelle und der Schicht aus thermoplastischem Material angeordnet ist; wobei die bikonvexe Linse einen Fokus aufweist, der auf der langgestreckten Quelle angeordnet ist, und einen Fokus aufweist, der auf der zweiten Fokussierlinie angeordnet ist.

10. Maschine nach einem der Ansprüche 5 bis 7, **dadurch gekennzeichnet, dass** die zweiten Fokussiereinrichtungen mindestens eine Sammellinse aufweisen, die stromabwärts der ersten Fokussiereinrichtungen in der Ausbreitungsrichtung des von der langgestreckten Quelle emittierten Heizstrahls angeordnet ist.

11. Maschine nach Anspruch 10, **dadurch gekennzeichnet, dass** die ersten Fokussiereinrichtungen eine Auslassöffnung für den Heizstrahl aufweisen; wobei die Sammellinse zumindest teilweise die Auslassöffnung schließt.

12. Maschine nach Anspruch 1, **dadurch gekennzeichnet, dass** die erste Fokussiereinrichtungen eine bikonvexe Linse aufweisen, um den Heizstrahl auf den langgestreckten Zwischenbereich zu fokussieren.

13. Langgestreckte Heizquelle für eine Maschine zum Schneiden einer laminierten Glasplatte, die zwei Seitenglasplatten und eine Zwischenbahn aus thermoplastischem Material aufweist; wobei die Maschine Ritz- und Brecheinrichtungen zum Teilen der laminierten Glasplatte in zwei Plattenteile, die durch einen langgestreckten Zwischenbereich der Bahn aus thermoplastischem Material miteinander verbunden sind, aufweist; wobei die Quelle eine äußere Lampe und Wärme emittierende Einrichtungen aufweist, welche eine langgestreckte **Glühquelle** aufweisen, die in der Lampe aufgenommen ist und in der Lage ist, einen divergenten Heizstrahl zu erzeugen, der eine optische Achse aufweist, die den langgestreckten Zwischenbereich im Gebrauch schneidet, **dadurch gekennzeichnet, dass** sie ferner erste Fokussiereinrichtungen zum Fokussieren mindestens eines Teils des Heizstrahls entlang mindestens einer ersten langgestreckten Fokussierlinie fokussiert und eine langgestreckte Wärmeklinge bildet, die sich im Gebrauch entlang des langgestreckten Bereichs erstreckt, um den langgestreckten Bereich zeitgleich zu erwärmen.

14. Quelle nach Anspruch 13, **dadurch gekennzeichnet, dass** sie ferner zweite Fokussiereinrichtungen aufweist, die von den ersten Fokussiereinrichtungen verschieden und zu diesen unterschiedlich sind, um mindestens einen Teil des Heizstrahls, entweder direkt oder durch die ersten Fokussiereinrichtungen reflektiert, zu lenken und diesen entlang mindestens einer zweiten Fokussierlinie zu fokussieren, die entweder mit der ersten Fokussierlinie zusammenfällt oder von dieser verschieden ist.

15. Quelle nach Anspruch 14, **dadurch gekennzeichnet, dass** die ersten und die zweiten Fokussiereinrichtungen einen Teil der Lampe bilden.

## Revendications

1. Machine pour couper une plaque de verre laminé, comportant deux plaques de verre latérales et une plaque intermédiaire en matériau thermoplastique; la machine comportant un plan d'appui, des moyens pour graver et pour rompre en vue de diviser la plaque de verre laminé en deux pièces de plaque, jointes entre elles par une portion intermédiaire allongée de ladite plaque intermédiaire en matériau thermoplastique, et un assemblage de moyens pour chauffer ladite portion intermédiaire allongée; l'assemblage de chauffage comprenant un bulbe extérieur et des moyens émetteurs de chaleur comprenant une source incandescente allongée logée dans ledit bulbe ; ladite source incandescente allongée étant disposée au-dessus ou en-dessous dudit plan d'appui, maintenue au cours de la phase de chauffage dans une position fixe par rapport audit plan d'appui et à ladite plaque, en vue d'émettre un faisceau chauffant divergent, ayant un axe optique qui coupe ladite portion intermédiaire allongée, **caractérisée en ce que** ledit assemblage de chauffage comprend en outre des premiers moyens de focalisation pour focaliser au moins une partie dudit faisceau chauffant le long d'au moins une première ligne de focalisation allongée, soit à l'extérieur, soit en intersection avec ladite portion intermédiaire allongée de ladite plaque intermédiaire de matériau thermoplastique et constituant une lame thermique qui s'étend le long de ladite portion allongée pour chauffer simultanément ladite portion intermédiaire.

2. Machine selon la revendication 1, **caractérisée en ce que** lesdits premiers moyens de focalisation comportent un corps réfléchissant qui contient ladite source allongée pour défléchir la partie maximale dudit faisceau chauffant émis par ladite source allongée sur ladite première ligne de focalisation.

3. Machine selon la revendication 1, **caractérisée en ce que** lesdits premiers moyens de focalisation comportent au moins une paire de grilles réflectrices latérales concaves disposées sur les côtés opposés dudit axe optique.

4. Machine selon la revendication 3, **caractérisée en ce que** lesdites grilles sont miroitantes par rapport à un plan couché dudit axe optique et perpendiculaires à ladite plaque de verre laminé.

5. Machine selon l'une quelconque des revendications 1 à 4, **caractérisée en ce que** ledit assemblage de focalisation comprend également des seconds moyens de focalisation différents et distincts desdits premiers moyens de focalisation pour défléchir au moins une partie dudit faisceau chauffant soit directement, soit réfléchie par lesdits premiers moyens de focalisation et pour la focaliser au moins le long d'une seconde ligne de focalisation qui coïncide ou qui est distincte de ladite première ligne de focalisation.

6. Machine selon la revendication 5, **caractérisée en ce que** ladite seconde ligne de focalisation est disposée sur ladite portion intermédiaire allongée et ladite première ligne de gravure est disposée après la portion intermédiaire allongée dans la direction de propagation dudit faisceau chauffant.

7. Machine selon la revendication 6, **caractérisée en ce que** ladite seconde ligne de focalisation est disposée après la portion intermédiaire allongée dans la direction de propagation dudit faisceau chauffant, et ladite première ligne de focalisation est disposée soit en-dessous, ou sur ladite portion intermédiaire allongée.

8. Machine selon l'une des revendications 5 à 7, **caractérisée en ce que** lesdits seconds moyens de focalisation comportent au moins une lentille convergente entourée desdits premiers moyens de focalisation.

9. Machine selon la revendication 8, **caractérisée en ce que** ladite lentille est une lentille biconvexe disposée en substance à mi-distance entre ladite source de chaleur et ladite couche de matériau thermoplastique , ladite lentille biconvexe ayant un foyer disposé sur ladite source allongée et un foyer disposé sur ladite seconde ligne de focalisation.

10. Machine selon l'une des revendications 5 à 7, **caractérisée en ce que** lesdits seconds moyens de focalisation comportent au moins une lentille convergente disposée après lesdits premiers moyens de focalisation dans une direction de propagation du faisceau chauffant émis par la source allongée.

11. Machine selon la revendication 10, **caractérisée en ce que** lesdits premiers moyens de focalisation comportent une ouverture d'évacuation du faisceau chauffant ; ladite lentille convergente étant agencée pour fermer partiellement ladite ouverture d'évacuation.

12. Machine selon la revendication 1, **caractérisée en ce que** lesdits premiers moyens de focalisation comportent une lentille biconvexe pour focaliser les moyens de chauffage sur ladite portion intermédiaire allongée.

13. Source de chauffage allongée pour une machine pour couper une plaque de verre feuilleté, comportant deux plaques de verre latérales et une plaque intermédiaire en matériau thermoplastique ; la machine comportant des moyens pour diviser la plaque de verre en deux pièces de plaque jointes entre elles par une portion intermédiaire allongée de ladite plaque intermédiaire en matériau thermoplastique ; et un assemblage de moyens de chauffage de ladite portion intermédiaire allongée ; la source comprenant un bulbe extérieur et des moyens d'émission de chaleur comprenant une source allongée incandescente logée dans ledit bulbe et agencée pour générer un faisceau de chauffage divergent ayant un axe optique en intersection, en phase d'utilisation, avec ladite portion intermédiaire allongée, **caractérisée en ce qu'**elle comprend en outre des premiers moyens de focalisation pour focaliser au moins une partie dudit faisceau de chauffage le long d'une première ligne de focalisation allongée et obtenir une lame thermique allongée le long de ladite portion allongée pour chauffer la portion intermédiaire dans la direction de propagation dudit faisceau de chauffage.

14. Source selon la revendication 13, **caractérisée en ce qu'**elle comporte en outre des seconds moyens de focalisation différents et distincts desdits premiers moyens de focalisation pour défléchir au moins une partie dudit faisceau chauffant soit directement, soit réfléchie par lesdits premiers moyens de focalisation et pour la focaliser au moins le long d'une seconde ligne de focalisation qui coïncide ou qui est distincte de ladite première ligne de focalisation.

15. Source selon la revendication 14, **caractérisée en ce que** lesdits premiers et lesdits seconds moyens de focalisation constituent une partie dudit bulbe.
